# EUROPEAN PATENT APPLICATION

(11) **EP 1 256 753 A1**
(43) Date of publication of application: **13.11.2002**
(21) Application number: 02252482.1
(22) Date of filing: 05.04.2002
(51) Int. Cl.: F16L 11/08, F16L 11/127

(54) **Hose assembly and method of making same**

(30) Priority: 05.04.2001 US 827042
(71) Applicant: Teleflex Fluid System, Inc, Sterling Heights, Michigan 48314 (US)
(72) Inventor: Martucci, Norman S., Clarkston, Michigan 48348 (US); Boney, Mathew, Clarkston, Michigan 48348 (US); Bentley, Robert, Windsor, CT 06095 (US)
(74) Representative: Neill, Alastair William

(57) **Abstract**

There is provided a hose assembly having a tubular first layer made up of a polymeric material resistant to chemical and heat degradation, a jacket disposed about the first layer, and at least one Aramid-like braided layer disposed between the first layer and the jacket. A method of making a hose assembly by forming a tubular first layer, disposing an Aramid-like braid about the first layer and extruding a jacket over the braid is also provided.

## Description

### BACKGROUND OF THE INVENTION

### TECHNICAL FIELD

The present invention relates to a hose assembly. More specifically, the present invention relates to a hose assembly utilizing a braid to prevent elongation or expansion of the hose assembly.

### DESCRIPTION OF RELATED ART

Hose assemblies used to carry brake fluid are well known in the art. The hose should preferably be strong and resistant to heat and chemical degradation. These hoses are subject to chemical breakdown by the various fluids which flow through them. Further, these hoses are typically routed through the engine compartment of the vehicle to deliver brake fluid to the brakes. These engines are hot and thus, the hoses used to carry brake fluids are subject to breakdown from the heat.

Teflon® hoses provide the necessary physical properties for carrying these fluids. A problem with these types of hoses is that when used alone, i.e., only Teflon®, they tend to get bent during installation and they kink. This kink remains permanent and provides resistance to fluid flow through the hose. To solve this problem, one known hose assembly includes an inner Teflon® tubular member. The inner tubular member is surrounded by a tightly wound metallic braid. The metallic braid allows the Teflon® inner tubular member to bend to a certain degree without kinking. However, if bent past a certain point the metallic braid aids in the permanent deformation or kinking of the inner tubular member. This assembly, therefore, has three major disadvantages. First the metallic braid could abrade the exterior of the inner tubular member. This causes leaks from the inner tubular member. The second problem is that the exterior metallic braided casing is thermally and electrically conductive. More important is that the metallic braid will retain heat and transfer the heat to the fuel moving through the inner tubular member causing fuel system problems. Finally, if used in an automotive environment, the metallic braid transmits noise during operation of the vehicle, which is undesirable.

Various approaches have been described for offering additional strength utilizing a braid. One such approach involves applying a sheath jacket or coating on top of a braid which is disposed about a first layer. This approach is disclosed in U.S. Patent No. 5,062,456 to Cooke et al., U.S. Patent No. 5,124,878 and 5,124,782 to Martucci, U.S. Patent 5,192,476 to Green, U.S. Patent No. 5,361,806 to Lalikos, et al. and U.S. Patent 5,381,834 to King, all of which disclose either a sheath jacket or some form of coating which is identical to or similar to the first layer material.

It would therefore be useful to develop a hose assembly having a first layer, a braid disposed about said first layer and a jacket extruded about said braid and first layer such that the extruded jacket holds the braid in place.

### SUMMARY OF THE INVENTION

According to the present invention, there is provided a hose assembly having a tubular first layer made up of a polymeric material resistant to chemical and heat degradation, a jacket disposed about the first layer, and at least one Aramid/glass mixed braided layer disposed between the first layer and the jacket. A method of making a hose assembly by forming a tubular first layer, disposing a Aramid/glass mixed braid about the first layer and extruding a jacket over the braid is also provided.

### DESCRIPTION OF THE DRAWINGS

Other advantages of the present invention will be readily appreciated as the same becomes better understood by reference to the following detailed description when considered in connection with the accompanying drawings wherein:

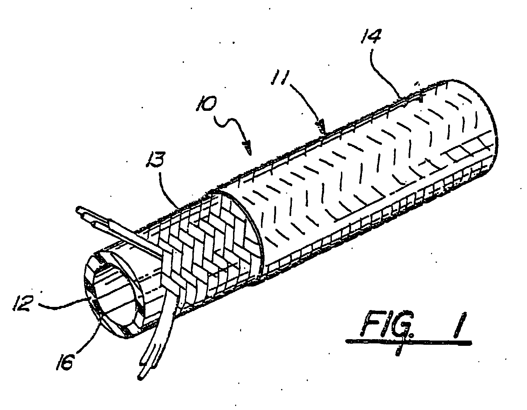

Figure 1 is a perspective view partially broken away and in cross-section of the preferred embodiment of the present invention.

### DETAILED DESCRIPTION OF THE INVENTION

A hose assembly made in accordance with the present invention is generally shown at 10 in Figure 1. The assembly 10 includes a tubular first layer 12, and a jacket 14 disposed about the first layer. The assembly 10 can also include a conductive layer 16 disposed about the first layer 12, and a coupling means 18 adapted to engage the ends of the hose assembly 10.

The tubular first layer 12, as best shown in Figure 1 comprises a polymeric material resistant to both chemical and heat degradation, thus allowing a variety of fluids, particularly automotive fuels, fuel additives, e.g., detergents, alcohols, etc., and brake fluid to pass through the first layer 12 without corroding or degradating the first layer 12. The first layer 12 is preferably extruded using well-known melt or paste extrusion techniques and has a wall thickness of between 0.001 and 0.120 inches. Although the first layer 12 may be made of any number of polymeric materials, the first layer 12 is ideally made from a polymer of the following: polytetrafluoroethylene (PTFE), the homopolymer of tetrafluoroethylene sold under the trademark TEFLON® by DuPont; perfluorinated ethylene-propylene (FEP), the copolymer of tetrafluoroethylene and hexafluoropropylene sold under the trademark TEFLON® FEP by DuPont; perfluoralkoxy fluorocarbon resin (PFA), the copolymer of tetrafluoroethyleneperfluorovinyl ether sold under the trademark TEFLON® PFA by DuPont; or ethylene tetrafluoroethylene (ETFE), the copolymer of ethylene and tetrafluoroethylene sold under the trademark TEF-ZEL by DuPont; or PVDF. In addition to the aforementioned polymeric fluorocarbon materials, polychlorotrifluoroethylene, the homopolymer of chlorotrifluoroethylene, and polychlorotfifluoroethylene-ethylene, the copolymer of chlorotrifluoroethylene and ethylene may also be used.

Preferably, the first layer 12 may comprise an unexpanded polymeric fluorocarbon material. Alternatively, the first layer 12 is comprised of an expanded polymeric fluorocarbon material, as shown in Figure 1. Although expanded and unexpanded polymeric fluorocarbon first layers 12 both offer the hose assembly 10 increased hoop and tensile strength, the unexpanded polymeric fluorocarbon material is preferred. The expansion process, commonly known in the art as "foaming", generally takes place while extruding the first layer 12. Such foaming processes generally require blowing agents such as CELOGEN HT 550™, an exothermic blowing agent sold by Uniroyal Chemicals or EXTIVEX 537™, an endothermic blowing agent sold by J. M. Huber Corporation, or any other gas or chemical base capable of "foaming" the polymeric material. The blowing agent is generally intermixed with the polymeric material during the extrusion of the first layer 12 and causes expansion of the polymeric fluorocarbon by producing gas, thereby forming void spaces within the first layer 12.

The jacket 14, best shown in Figure 1, is disposed about the first layer 12. The jacket 14 comprises a material, such as a polyketone, ETFE, PFA, TPE, etc. for increasing the abrasion of the hose assembly 10. While the jacket can be made of a polymeric material, it is not limited to such materials, and can instead include any material known to those of skill in the art. More specifically, the jacket 14 allows the first layer 12 to be bent in a tighter radius without kinking. That is, the jacket 14 assists in the distribution of stress to the first layer 12 upon bending. Thus, by disposing the jacket 14 about the first layer 12, the hoop strength of the first layer 12 is increased. Further, the jacket 14 adds to the working pressure of the hose. That is, the jacket 14 provides strength to the first layer 12 and allows the first layer 12 to accommodate a fluid under pressure. Additionally, the jacket 14 adds to the tensile strength of the hose assembly 10. When coupling members 18 are disposed on the ends of the hose assembly 10, as described below, the jacket 14 increases the tensile strength of the hose assembly 10 sufficiently to fixedly connect the coupling member 18 to the hose assembly 10.

Although the jacket 14 may be made of any number of materials, preferably the jacket 14 is made from a polyamide material selected from the following: nylon 6; nylon 6,6; nylon 11; or nylon 12. It should be noted the selection of a particular polyamide material should be based upon the physical requirements of the particular hose assembly application. For example, nylon 6 and nylon 6,6 offer higher heat resistant properties than nylon 11 or nylon 12, whereas nylon 11 and nylon 12 offer better chemical resistant properties than nylon 6 or nylon 6,6. Thus, the ultimate selection of a polyamide material should be based upon requirements of a particular hose assembly application. In addition to those polyamide materials previously mentioned, other nylon materials such as: nylon 6,12; nylon 6,9; nylon 4; nylon 4,2; nylon 4,6; nylon 7; and nylon 8 may also be used. Ring containing polyamides including aliphatic-aromatic polyamides e.g., nylon 6,T and nylon 6,1 may also be used. Finally, the jacket 14 may also comprise various polyamide blends. Again, it is noted that the selection of a particular polyamide material is dependent upon the specific physical requirements of a particular hose assembly application.

Preferably, the jacket 14 may comprise an unexpanded polyamide material. Alternatively, the jacket 14 is comprised of an expanded polyamide material, as shown in Figure 1. Although expanded and unexpanded polyamide jacket 14 both offer the hose assembly 10 increased hoop and tensile strength, the unexpanded polyamide material is preferred. The expansion process, commonly known in the art as "foaming", generally takes place while extruding the jacket 14. Such foaming processes generally require blowing agents such as CELOGEN HT 550™, an exothermic blowing agent sold by Uniroyal Chemicals or EXTIVEX 537™, an endothermic blowing agent sold by J. M. Huber Corporation. The blowing agent is generally intermixed with the polyamide material during the extrusion of the jacket 14 and causes expansion of the polyamide by producing gas, thereby forming void spaces within the jacket 14.

Methods for fabricating the present hose assembly 10 are well-known in the art. One particularly well-known method involves a two-part extrusion process typically known as "cross-head" extrusion. The typical "cross-head" extrusion method involves first extruding a first layer 12, such as the polymeric fluorocarbon first layer 12, then extruding a conductive layer 13 thereover. This method of fabrication is particularly effective when utilizing a first layer 12 comprising polytetrafluoroethylene. This is primarily due to the difficulty encountered in extruding polytetrafluoroethylene. That is, polytetrafluoroethylene generally must be paste extruded whereas thermoplastic polymeric fluorocarbon materials may often be melt extruded. When utilizing thermoplastic polymeric fluorocarbon materials, coextrusion methods of fabricating may be applicable. As commonly known in the art, coextrusion methods involve utilizing two extruders at once thereby forming both the first layer 12 and a conductive layer 13 simultaneously.

The assembly can also be made using the following method. Additionally, the foamed structure can be formed by utilizing both a chemical blowing agent formulated with the melt extrudable fluoropolymer material prior to extrusion and by injecting a physical forming agent such as in inert gas into the barrel of the extruder as described above.

The control of void size and void content is critical as these parameters affect both the flexibility and permeability of the product. For example, an extruded tubular structure having a high content of small voids will yield a more flexible tubular structure. A tubular structure having a low content of large voids will yield a more rigid foamed tubular structure. In general, the void content of the tubular structure 10 can range from approximately 5-85%. Preferably, the void content ranges from approximately 20% to 50%. Also, in the preferred embodiment of the present invention, the voids or cells are closed. Closed cells or voids are preferred over open voids or cells as open cells can allow the migration and/or collection of fluids within the wall 16 of the tubular structure 10.

The amount of closed cells versus open cells in the extrudate can be varied by controlling factors such as the die temperature, melt temperature of the polymer, and the amount of blowing agent used.

During the extrusion of the expanded tubular structure 10, a skin 20, can be formed on either the outer surface 12, inner surface 14, or both surfaces of the extruded tubular structure 10. As described above, the skin 20,120 is a thin layer which can be varied in thickness. The skin creates a substantially smooth surface which defines the margins of the inner and/or outer diameters of the tubular structure 10.

The skin can be formed by several methods. A preferred method of forming the skin on either the outer surface 12, the inner surface 14, or both includes cooling or chilling either the mandrel, the die, or both to cause the formation the skin 20. By cooling or chilling the mandrel, the inner diameter of the tubular structure 10 or the inner surface 14 of the tubular structure 10, a skin can be formed. Likewise, by coding or chilling the die, the outer diameter of the tubular structure 10, or outer surface, 12, the skin 20 can be formed. It is generally thought that chilling or cooling either the mandrel, the die, or both, causes the closed voids or cells contacting thereon to break, thus forming the skin 20. The temperature necessary to cause the formations of the skin 20 ranges from 500 to 700° F. depending on the polymer used. In general, a temperature decrease needed to form a skin is approximately 10-25% cooler than the melt temperature of the polymer. Also, a cooling bath or vacuum chamber can be used to retain the small cell structure which has been generated and to prevent blow holes on the surfaces of the foamed article.

Additionally, the skin 20 can be formed by coating either the mandrel, die, or both with a substance such as a defoaming agent like a polysiloxane co-polymer which, when the foamed or expanded fluoropolymer material comes into contact, causes the closed cells or voids to burst thereby yielding the skin 20.

After the extrudate has exited the die and mandrel, the extrudate immediately enters a chamber in which a vacuum is applied to the outer surface 12 of the tubular structure 10 to prevent the tubular structure 10 from collapsing. Within this vacuum chamber, a uniform negative pressure is applied about the outer surface 12 of the tubular structure 10. The amount of negative pressure ranges from approximately 10 inches of water to approximately 200 inches of water. The uniform application of the negative pressure about the outer surface 12 of the tubular structure 10 yields a tubular structure 10 having a substantially uniform eccentricity and concentricity.

Additionally, the formation of the skin 20 and the eccentricity and concentricity of the tubular structure 10 can be altered by varying the length of the die and/or the mandrel.

The vacuum chamber can include a cooling or quenching fluid, such as water, which causes the substantially molten expanded fluoropolymer material comprising expanded tubular structure 10 to solidify. This solidifying step can also occur outside of the vacuum chamber. That is, the extrudate can pass through the vacuum chamber and into a separate zone or container wherein it contacts the cooling fluid where the molten fluoropolymer material is solidified.

At this point, the formation of the expanded tubular structure 10 is substantially complete. As described above, a hose assembly 10 can be constructed by disposing at least one outer layer 14 about the tubular inner liner 12. The outer layer 14, as described above, can be disposed about the tubular inner layer 12 either by extrusion, braiding, or other techniques known to those skilled in the art. The methods for applying the outer layer 14 about the tubular layer 12 are described in detail above.

Additionally, the first layer 12 can be a conductive layer. In this embodiment, the first layer 12 contains therein conductive material such as carbon black. This is accomplished by intermixing the conductive material throughout the polymeric material while the first layer 12 is extruded.

Due to the chemical inertness and general lubricous nature of polymeric materials, relative movement between the first layer 12 and jacket 14 is often encountered. In hose applications which require immobility among the layers and the jacket, the present hose assembly 10 may be modified to eliminate such relative movement between the first layer 12 and jacket 14.

An embodiment for a limiting relative movement between the first layer 12 and jacket 14 is shown in Figure 1. This embodiment includes disposing at least one braided layer 26 between the first layer 12 and jacket 14. More specifically, the embodiment includes a braided or woven layer 26 disposed in an inter-weaving fashion, or wrapped about the outer surface 20 of the first layer 12. Preferably, the material used for the braided layer 26 is an Aramid blend. Aramid fibers are preferred due to Aramid's heat resistance. These fibers are not impacted by heat of the process, therefore heat does not disturb the braid angle which is critical in protecting the hose from kinking.

An essential aspect of the braided layer 26 is that the fibers which form the braided layer 26 must be properly twisted and be braided to the proper braid angle, which results in a fiber which can pass both a whip test and a volume expansion test. It is important to twist the fiber enough without overtwisting the fiber. The fiber must be twisted sufficiently so that the fiber can pass both a whip test and a volumetric expansion test. Both tests must be passed in order for the proper braid angle to be established. In the preferred embodiment, all of the fibers have an S-twist. However, in alternative embodiments of the present invention, the braid can be made of fibers all having Z-twists or the braid can be made of a balanced twist, thus the braid contains equal amounts of fibers having both S- and Z-twists.

The braided layer 26 may either be attached or unattached to the first layer 12 prior to the extrusion of the jacket 14. Preferably the braided layers 26 is not attached and thus when the jacket 14 is extruded over the braided layer 26 and the first layer 12, this action serves to hold the braided layer 26 in its proper place.

The braided or woven fibers can be tightly wound about the first layer 12. When loosely bound, the fibers will have wide gaps between adjacent fibers and thus not provide sufficient support for the first layer 12. The jacket 14 is then extruded about the braided layer 26. This allows the braided layer 26 to be attached firmly to both the jacket 14 and the first layer 12 without requiring the use of any sort of emulsion or other adhesive or dispersing agent.

In another embodiment of the present invention, the braided layer 26 is attached using an emulsion, adhesive or other dispersing agent. This is accomplished by "dipping" the formed first layer 12 in the attaching compound and then placing the braided layer 26 about the first layer 12 now coated with the attaching compound.

While Aramid alone is the preferred material to be used for the braided layer 26, additional compositions can be utilized. One such composition includes the addition of glass fibers into the Aramid braid thus further preventing any elongation or expansion of the tube of the braided layer 26 relative to the first layer 12 and jacket 14.

As fluid flows through the first layer 12, electrical charges tend to build throughout the length of the first layer 12. Therefore, in an additional embodiment of the present invention, in order to prevent these electrical charges from accumulating, the first layer 12 preferably includes an integral longitudinal conductive means 16 coextensive with the length of the first layer 12 for conducting an electrical charge along the length of the first layer 12. Preferably the integral conductive means 16 comprises a conductive layer 13 containing carbon black, as shown in Figure 1. Alternatively, the integral conductive layer 13 can be included in the first layer 12 with the carbon black being included in the composition of the first layer 12 as shown in Figure 1. Therefore, the integral conductive compound can be interdispersed throughout the first layer 12 by intermixing carbon black throughout the polymeric material while the first layer 12 is extruded. The braided layer 26, intermediate coating 28, and first layer 14 are all preferably electrically non-conductive. This is important in that electrical charges applied to the exterior of the hose assembly 10 will not be conducted along its length nor to the fluid passing therethrough. It will be appreciated that the integral conductive means may comprise conductive material other than carbon black.

The assembly 10 further includes coupling means 18. The coupling means 18 is adapted to engage the ends of the hose assembly 10 to a flow of fluid, e.g., brake fluid flows to and from the brakes. More particularly, the coupling means 18 includes a coupler 18 or joint having an insert portion 34 for inserting into and engaging the inner surface 33 (Figure 1) of the first layer 12. The insert portion 34 can have a plurality of barbs 36 for engaging the inner surface 33 (Figure 1) of the first layer 12. The coupling means 18 can also include an engaging portion extending longitudinally from the insert portion 34 for engaging a fitting. The engaging portion can comprise a male threaded member or female threaded member. The engaging portion can comprise any configuration that will cooperate with the member to which it is to be connected with. For example, the engaging portion can comprise a socket to receive a mating ball joint. Alternatively, in place of the engaging portion, the coupling means 18 can provide an additional insert portion 34 for inserting into and engaging the interior surface of the first layer 12 of another hose assembly 10 as shown in Figure 1. Thus, the coupling means 18 can operate as a joint between independent hose assemblies 10 thereby interconnecting them to allow fluid flow therebetween. The coupling means 18 is preferably made from a metal material and mechanically connected to the hose assembly 10. Alternatively, the coupling means 18 can be crimp or clamped, or otherwise connected or molded to the hose assembly.

Although the present hose assembly has been described for conveying brake fluid, it will be readily appreciated that the present hose assembly 10 may be used for conveying a variety of fluids, e.g., cooling fluids, lubricating fluids, etc.

Throughout this application, various publications, including United States patents, are referenced by author and year and patents by number. Full citations for the publications are listed below. The disclosures of these publications and patents in their entireties are hereby incorporated by reference into this application in order to more fully describe the state of the art to which this invention pertains.

The invention has been described in an illustrative manner, and it is to be understood that the terminology which has been used is intended to be in the nature of words of description rather than of limitation.

Obviously, many modifications and variations of the present invention are possible in light of the above teachings. It is, therefore, to be understood, that within the scope of the appended claims wherein reference numerals are merely for convenience and not to be in any limiting, the invention may be practiced otherwise than as specifically described.

## Claims

1. A hose assembly comprising:
a tubular first layer, comprising a polymeric material resistant to chemical and heat degradation;
at least one aramid-like layer disposed about said inner and layers; and an extruded jacket disposed about said braided layer, said jacket maintaining said braided layer in place.

2. The hose assembly according to claim 1, further **characterized by** said braided layer comprising Aramid fibers.

3. The hose assembly according to claim 2, wherein said braided layer further includes glass fibers commingled with said Aramid fibers.

4. The hose assembly according to claim 2, wherein said polymeric material of said tubular first layer is a polyketone.

5. The hose assembly according to claim 2, wherein said polymeric material of said first layer is a polymeric fluorocarbon.

6. The hose assembly according to claim 2, wherein said polymeric material of said jacket is a polymeric material.

7. The hose assembly according to claim 6, wherein said polymeric material of said jacket is a polymeric fluorocarbon or a polyamide.

8. The hose assembly according to claim 6, wherein said polyamide material of said jacket is unexpanded.

9. The hose assembly according to claim 8, wherein said polyamide material of said jacket is selected from the group consisting essentially of: nylon 6; nylon 6,6; nylon 11; and nylon 12.

10. The hose assembly according to claim 5, wherein said polymeric fluorocarbon material of said first layer is expanded.

11. The hose assembly according to claim 10, wherein said polymeric fluorocarbon material of said first layer is selected from the group consisting essentially of: polytetrafluoroethylene; perfluorinated ethyline-propylene; perfluoralkoxy fluorocarbon resin; and polyfluoroethylene.

12. The hose assembly according to claim 1, wherein said first layer further includes a conductive means in said first layer for conducting electrical charges along the length of the first layer.

13. The hose assembly according to claim 1, wherein said hose assembly further includes a conductive layer containing therein conductive means for conducting electrical charges along the length of said hose assembly.

14. The hose assembly according to claim 12 or 13, wherein said conductive means is carbon black.

15. The hose assembly according to claim 1, wherein said hose assembly further includes a coupling means adapted to engage the ends of said hose assembly for interconnecting said hose assembly to a flow of fluid.

16. A method of making a hose assembly by:
forming a tubular first layer;
disposing an Aramid-like braid about the first layer; and extruding a jacket over the braid.

17. The method according to claim 12, wherein said forming step further includes extruding the tubular first layer.

18. A method of making a hose assembly by:
forming a tubular first layer;
dipping the tubular first layer in an adhesive emulsion;
disposing an aramid-like braid about the adhesive coated first layer; and extruding a jacket over the braid.
